Europäisches Patentamt

European Patent Office

Office européen des brevets

(11) Publication number: **0 187 823**
**B1**

# EUROPEAN PATENT SPECIFICATION

(45) Date of publication of patent specification: **24.01.90**

(21) Application number: **85903595.8**

(22) Date of filing: **02.07.85**

(86) International application number:
**PCT/US85/01262**

(87) International publication number:
**WO 86/00567 30.01.86 Gazette 86/03**

(60) Divisional application **87111682 filed on 12.08.87.**

(51) Int. Cl.⁵: **B 29 C 65/08**

## (54) ULTRASONIC SPOT WELDING ASSEMBLY AND METHOD.

(30) Priority: **12.07.84 US 630190**
**21.03.85 US 714275**

(43) Date of publication of application:
**23.07.86 Bulletin 86/30**

(45) Publication of the grant of the patent:
**24.01.90 Bulletin 90/04**

(84) Designated Contracting States:
**AT BE CH DE FR IT LI LU NL SE**

(56) References cited:
**EP-A-0 008 362**
**FR-A-2 079 944**
**FR-A-2 084 015**
**US-A-3 563 822**

(73) Proprietor: **REYNOLDS CONSUMER PRODUCTS, INC.**
**670 North Perkins Street**
**Appleton Wisconsin 54913 (US)**

(72) Inventor: **BACH, Gary**
**1409 N. Graceland Street**
**Appleton, WI 54911 (US)**

(74) Representative: **Abitz, Walter, Dr.-Ing. et al**
**Abitz, Morf, Gritschneder, Freiherr von**
**Wittgenstein Postfach 86 01 09**
**D-8000 München 86 (DE)**

Courier Press, Leamington Spa, England.

## Description

This invention relates to a method and a system for spot welding a plurality of sheets of thermoplastic material together wherein a welding means is inserted into an obverse face of said juxtaposed sheets a sufficient distance so that the welding means at least partially penetrates each sheet of material being welded and ultrasonic energy is supplied through said thermoplastic sheet material adjacent to said welding means.

Ultrasonic welding has been used for bonding in a number of materials. Most commonly, ultrasonic bonding is utilized in thermoplastic materials. Recently, it has been discovered that ultarsonic spot welding could be accomplished. See, for example, the November-December 1980 issue of *Plastics Design Forum*, page 86. This publication describes techniques of ultrasonic spot welding as well as the advantages in producing a clean appearance on the surface opposite the weld. This article describes a process for welding two thermoplastic sheets together wherein a standard welding tip penetrates one sheet and extends halfway through the second. The article further addresses the possibility of inverse spot welding, that is, fitting the welding tip to a mounting fixture or anvil, and utilizing a flat-faced horn to provide ultrasonic energy.

The use of ultrasonic spot welding is further described in an article entitled "Ultrasonic Assembly", by R. A. Clarke published in the 1980—81 *Modern Plastics Encyclopedia*, page 447—450. In this article, Clarke discloses the general advantages of an annular ring design in the horn or tip for ultrasonic spot welding.

A method and a system for spot welding in accordance with the prior art portion of claim 1 is known from US—A—3,563,822. In this prior art system, the welding means is a blunt, conical or frusto conical extension of the ultrasonic horn which is inserted into the obverse face of said juxtaposed sheet a distance equal to the height of said extension of the ultrasonic horn.

Weld joints made by these prior art methods and systems suffer from insufficient strength.

The invention as claimed in claims 1 and 11 solves the problem of how to improve the strength of weld joints made by the application of ultrasonic energy by thermoplastic sheets. By the method and system of the invention, a free flow of melted thermoplastic material away from the weld joint and tip is permitted during the welding process. It has been found that the accumulation of melted material in this region would otherwise interfere with the continued melting of the unmelted material at the weld joint as it would adsorb ultrasonic energy and so lend itself to thermal degradation which may result in a weld joint of insufficient strength. Furthermore, this melted material would cause overheating of the weld tip configuration, which can damage the welds and surrounding sheet material.

The welding tip can include a plurality of conical projections interspersed with a plurality of reservoir portions. The conical projections are placed in contact with the material to be welded and ultrasonic energy is applied to the material. The ultrasonic energy is concentrated and the melt is dispersed by the conical projections and heats the sheet material adjacent to these projections to thereby soften the material. The softened material is displaced by the conical projections and is gathered in reservoir portions of the tip which are provided for accumulation of the displaced material. The material continues to be softened and displaced until the conical projections are substantially fully inserted into the sheet material. The conical projections in the preferred embodiments are right circular conical, right circular frusto-conical or pyramid in shape or are configured so as to allow self-release of the sheet material therefrom. Teh reservoirs are constructed with a volume significantly greater than the volume of the conical projection in order to allow for expansion in the displaced material.

A plurality of weld tip configurations are provided on a common support and the welding tips on the anvil of each are selectively removable to provide different weld tip configurations depending on the characteristics of the materials being welded.

The weld tip support is disposed along a weld line and the ultrasonic energy is applied by a welding horn extending along the weld line. The welding horn tends to generate weaker ultrasonic energy in peripheral regions, such as those adjacent the distal ends of the welding horn. Accordingly, to compensate for the weaker ultrasonic energy in these regions, the tips may be made slightly longer than in intermediate regions or the tips may be disposed in more shallow counterbores in the associated anvils to engage a greater diameter of the tip therefore displacing more material. An alternative approach would be to employ a welding horn of greater length than the weld line to avoid edge effects.

In a first preferred embodiment of the present invention, the welding tips are right circular cones with heights A above the anvil and base diameters B at the anvil. An ideal ratio of A/B is 1.2 in a first preferred embodiment and 0.76 in a second preferred embodiment. With these ratios, the tips are self-releasing and also penetrate sheet material with a minimum of energy.

The welding tip may be removed from contact with the sheet material by displacement only in a direction parallel to the line along which the spot welds are produced.

Several examples of the invention will be described in more detail below with reference to drawings, in which:

Figure 1 is a perspective of a portion of a welding tip of the present invention;

Figure 2 is a schematic perspective of the use of the welding tip of the present invention in welding sheet material in an inverse spot welding process;

Figure 3 is a perspective of a portion of the welding tip of the present invention illustrating the provision of cooling passages therein; and

Figure 4 is a perspective of a portion of a welding tip according to the teachings of the present invention in which the semi-spherical reservoirs are replaced by troughs disposed adjacent the cylindrical projections and parallel to the weld line.

Figure 5 is a perspective of a welding tip configuration of a first preferred embodiment of the present invention;

Figure 6 is an enlarged frontal view of a single welding tip of the first preferred embodiment of the present invention;

Figure 7 is a schematic side view of the operation of a single welding tip of the type illustrated in Figure 6 for welding sheet material in an inverse spot welding process utilizing a positive stop for the weld horn;

Figure 8 is a top planar view of an anvil support bar illustrating a plurality of weld tip groups extending along a weld line; and

Figure 9 is a second preferred embodiment of a weld tip according to the present invention for welding sheet material in an inverse spot welding process which permits the elimination of the positive stop of Figure 7.

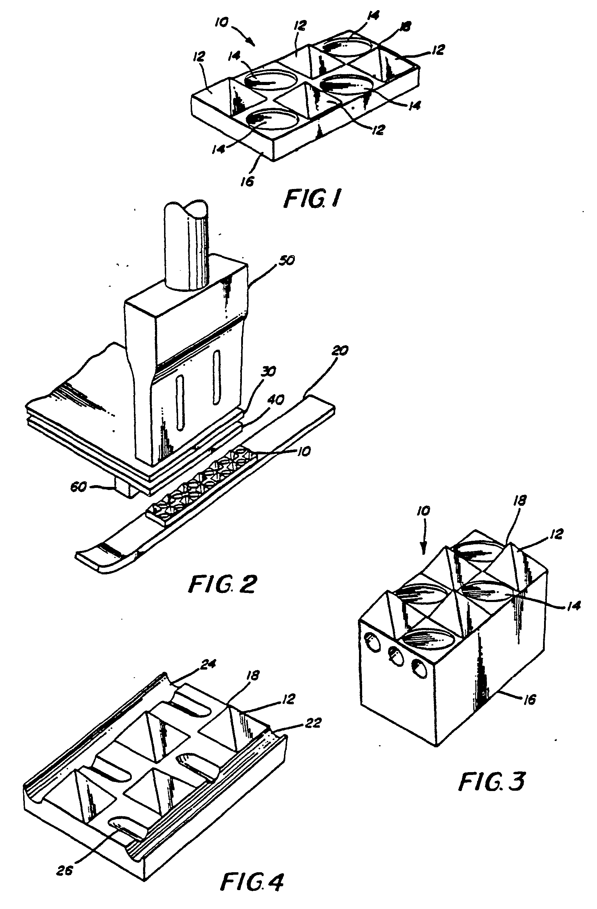

Referring to Figure 1, the welding tip of the present invention (generally indicated as 10) includes a plurality of conical projections 12 alternately interspersed with a plurality of reservoirs 14 along a tip base 16. The conical projections 12 serve to concentrate ultrasonic energy where they contact the sheet material at their respective apices 18. While the conical projections may be formed in any shape suitable for concentrating the ultrasonic energy and facilitating self-release which will be described hereinbelow, Figure 1 illustrates one form of cone. It should be noted, that the term cone is intended to encompass its broadened meaning and is not intended to limit the present application to the right -ircular cone which is merely one embodiment of cone utilizable in the welding tip of the present invention.

In a welding tip such as that illustrated in Figure 1, the distance between cone apex and base should be configured to equal approximately one and one-half times the thickness of the sheet material to be welded. Further, the cone base is desirably constructed with a width of approximately twice the cone's height or about three times the thickness of the sheet material to be bonded.

Figure 2 of the present application illustrates the use of the tip 10 of Figure 1 in an inverse ultrasonic spot welding process. To facilitate inverse ultrasonic spot welding, the welding tip 10 is securely fastened to an anvil or mounting bar 20 which is positioned on one side of two sheets of material to be welded 30, 40. Figure 2 further illustrates the placement of an ultrasonic transducer or horn 50 on the other side of the sheets of material to be bonded by spot welding according to the teachings of the present invention.

The spot welder schematically illustrated in Figure 2 functions as follows. The material to be bonded is supported by a support 60 with the first and second sheets 30, 40 juxtaposed along the desired lines to be welded. The tip 10 of the present invention is presented into contact with one side of the juxtaposed first and second sheets of material 30, 40 by movement of the anvil 20 upon which it is disposed. Simultaneously, the ultrasonic transducer or horn 50 is moved in a line perpendicular to the plane of the respective sheets of material in order to engage the other side of the sheets. Ultrasonic energy is applied to the sheets of material to be bonded via the ultrasonic horn 50. As the conical projections 12 of the welding tip 10 contact the sheet material at alternating spots therealong, the ultrasonic energy is concentrated at these spots. The sheet material is thereby softened and displaced by contact with the conical projections 12. The sheet material which is softened is accumulated in reservoirs 14 to remove the material from the area of utlrasonic energy concentration to avoid overheating of the softened material and to concentrate the ultrasonic energy on unsoftened material.

When the spot welds have been completed to their desired depth with the conical projections fully inserted into the sheet material, the ultrasonic energy is withdrawn. Cooling of the sheet thermoplastic causes shrinkage thereof. The configuration of the conical projections 12 is such that the welding tip self-releases from the sheet material. Thus, the configuration of the welding tip of Figure 1 facilitates self-release of the tip from the sheet material after welding and produces improved welds by providing reservoirs for accumulating the softened sheet material juxtaposed to the conical projections 12.

While the Figure 2 embodiment of the present invention illustrates the technique known as inverse spot welding, it is possible to utilize the welding tip of the present invention in normal spot welding by affixing the tip to the ultrasonic horn 50.

The reservoirs 14 of the Figure 1 welding tip are semi-spherical in shape and are typically sized to accumulate about 1.5 times the volume displaced by an associated conical projection. The volume of each reservoir should be at least 1 and 1/3 times the volume of an associated conical projection.

When the system of the present invention is utilized in automated production, residual heat buildup within the welding tip can be troublesome. Without adequate precautionary measures, the temperature of the welding tip can become sufficient to cause the sheet material to melt to the welding tip. Referring to Figure 3, where like numerals designate like parts with Figure 1, cooling passages may be provided within the welding tip 10 in order to control the temperature thereof. The temperature may then be controlled by controlling the flow rate of the coolant or by other means in order to maintain the welding tip to the desired temperature. With polyethylene, it is desirable to maintain the temperature at about 32°C. When the welding tip reaches 54.5 to 60°C, the polyethylene begins to stick to the tip. The weld tip 10 of the present invention may be either made integral with the anvil 20 or may be made replaceably fixable thereto.

In the specific application for which the system of the present invention is utilized, it is necessary to move the anvil 20 and weld tip 10 into place by moving the anvil in a direction parallel to the weld line produced. No significant movement perpendicular to the plane of the sheet materials is therefore permitted in this embodiment. Therefore, it is desirable to configure the weld tip so as to easily slide away from the completed weld along a direction parallel to the weld line.

In Figure 4, where like elements are also designated by like numerals, a modified weld tip is illustrated wherein the semispherical reservoirs of Figure 1 are replaced by a pair of peripheral troughs 22, 24 arranged on either side of the alternately arranged conical projections 12. These troughs 22, 24 are fed by a plurality of feeder trough reservoir portions 26 which direct the molten sheet material into troughs 22, 24 for collection. Upon completion of the weld, the weld tip of Figure 4 may be more easily removed from juxtaposition with the sheet material in a direction parallel to the weld line as there is no significant accumulation of material between the interspersed conical projections 12 in the area where the reservoirs 14 of the Figure 1 embodiment would otherwise accumulate material. Therefore, the lateral movement of the weld tip may be more easily facilitated.

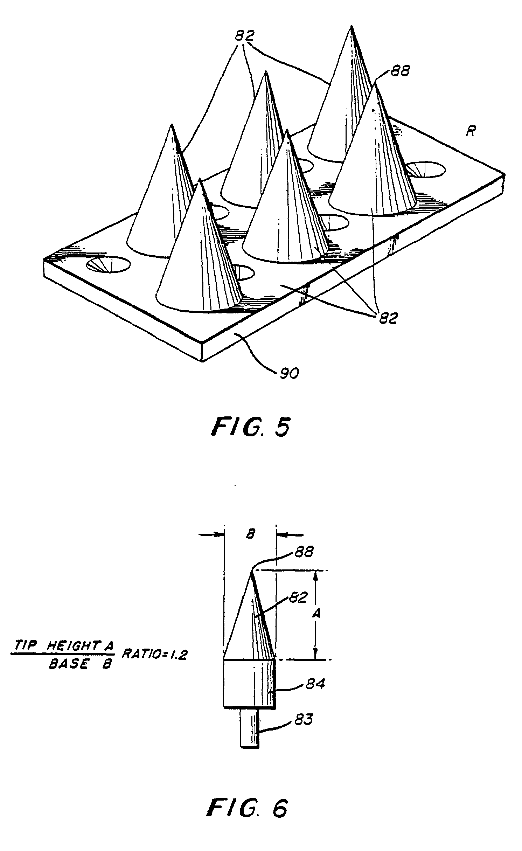

Referring to Figure 5, a single group of welding tips (generally indicated as 10) includes a plurality of staggered conical projections 82 removably mounted within the anvil body 90 or support plate 90. A plurality of optional drill-formed well reservoirs R may be provided between projections 82. A plurality of such welding groups would typically be disposed along a welding line. The conical projections 82 serve to concentrate ultrasonic energy and disperse the melt where they contact the sheet material at their respective apices 88. While the conical projections 82 may be formed in any shape suitable for concentrating the ultrasonic energy and facilitating self-release, which will be described hereinbelow, Figure 5 illustrates one form of cone. It should be noted that the term "cone" is intended to encompass its broadened meaning and is not intended to limit present application to a right-circular cone which is merely one embodiment of cone usable in the welding tips of the present invention. For example, a pyramid also falls within the generic definition of a cone.

Figure 6 is an enlarged diagrammatic illustration of a single welding tip of a first preferred embodiment of the present invention. Welding tip 81 is a single unit comprising a shank 83, a base portion 84 having a diameter B and a conical projection 82 of a height A extending upwardly from this base portion. In a welding tip such as that illustrated in Figure 6, the distance of height A between cone apex 88 and its junction with based portion 84 should be configured to equal approximately three times the thickness of a single sheet of material of two equal thickness sheets to be welded together. Further, the tip is preferably constructed such that the ratio of height A to width B of base portion 84 equals approximately 1.2.

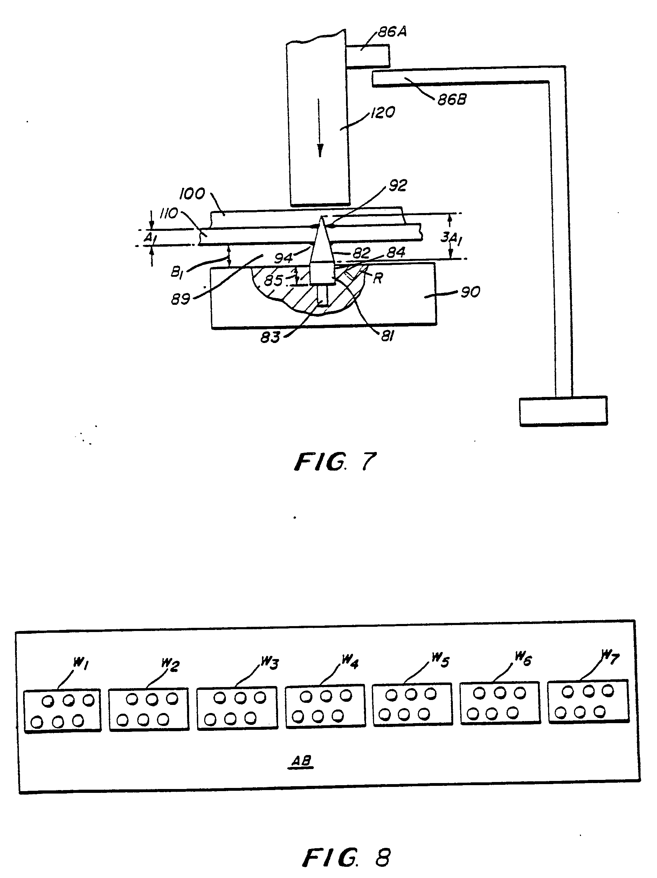

Figure 7 is a diagrammatic side elevational view illustrating the operation of a single welding tip 81 of the present invention for welding sheet material in an inverse spot welding process. To facilitate inverse ultrasonic spot welding, the welding tip 11 is fastened to a stationary anvil or mounting bar 90, which is positioned on one side of two substantially equal thickness sheets of material 100, 110 to be welded together. Figure 7 further illustrates the placement of a movable horn 120 on the opposite side of the sheets of material to be bonded by spot welding according to the teachings of the present invention. A positive stop 86A mounted on the horn 120 is operatively associated with a stationary stop 86B to limit the downward stroke of the horn. As horn 120 is lowered, it pushes sheets 100 and 110 against welding tip 81, causing cone 82 to pierce sheet 110 and penetrate sheet 100 by approximately half its thickness. The degree of penetration is, of course, controlled by the positions of stops 86A, 86B. Therefore, approximately 1.5 sheet thicknesses $A_1$ are penetrated by cone 82. Cone 82 has a height of approximately $3A_1$ (3 times the sheet thickness). Accordingly, a free reservoir space 89 of a thickness $B_1$ results between sheet 110 and anvil 90.

Ultrasonic energy is applied to the sheets of material to be bonded via the ultrasonic horn 120. As the plurality of conical projections 82 of the ultrasonic welding tips 81 penetrate the sheet material along the weld line, the ultrasonic energy is concentrated and the melt is dispersed at these spots. The sheet material is thereby softened, forming melt pools 92 between the sheets. Molten material, as at 94 is also accumulated in the free space 89 between anvil 90 and sheet 110. As stated hereinbefore, space 89 is created by stops 86A and 86B which allows the cones 82 to be inserted only through sheet 110 and approximately half the sheet thickness into sheet 100. The back flow of molten material produced by the ultrasonic welding action literally hangs at 94 from the sheets 100, 110 above the anvil 90. The free flow of the molten sheet material effectively removes a substantial portion of molten material from the region of the ultrasonic energy concentration and avoids overheating of the molten material so removed. Thus, ultrasonic energy can be better concentrated on unsoftened material to continue the welding process.

When the spot welds have been completed to their desired depth (1.5 times the thickness of the bottom sheet 110, the positive stops 86A, 86B controlling this distance), the application of ultrasonic energy is terminated. Cooling of the sheet thermoplastic causes shrinkage thereof. The configuration of the conical projections 82 is such that the cone 82 of welding tip 81 self-releases from the sheet material.

Thus, the configuration of the welding tip of Figures 5, 6 and 7 facilitates self-release of the tip from the sheet material after welding and produces improved welds by providing a natural reservoir space for accumulating a substantial portion of the softened or molten sheet material flowing from positions juxtaposed to the conical projections 82.

Further, the pointed and elongated tip portion 82 with a height-to-base ratio of approximately 1.2, as illustrated in Figure 6, allows for an enhanced piercing action through the sheet material which requires less load on the power supply during the welding process and still provides adequate weld strength.

Still further, the taper on the conical projection 82 is about 45°, resulting in less displaced melted sheet material and provides a cosmetically more acceptable weld.

While the Figure 7 embodiment of the present invention illustrates the technique known as inverse spot welding, it is also possible to utilize the tip of the present invention in normal spot welding by affixing the tip to the ultrasonic horn 120.

The outer zones of an ultrasonic welding horn 120, typically generate lower amplitude ultrasonic energy and therefore produce weaker welds at the outer peripheral zones of the horn. In accordance with the present invention as illustrated in Figure 8, weld tip groups $W_1$ and $W_7$ in the peripheral outer zones of an anvil support bar AB have a counterbore depth (85, Figure 7) for placement of the base of the removably mounted tips which is about 0.25 mm (0.010 inches) shallower than the counterbores of the remaining tip groups $W_2$ to $W_6$ on the anvil support bar along the weld line. Thus, cones 82 in tip groups $W_1$ and $W_7$ penetrate further into sheets 100, 110. This compensates for the inherent feature of lower power output at outer zones of the ultrasonic horn 120.

The shanks 83 and bases 84 of welding tips 11 are removably mounted in the anvil body 90 in counterbore sockets, as illustrated in Figure 7, for ease of maintenance and replacement. More importantly, the number of tips in each grouping and the size of the tips in each grouping on the anvil may be easily changed to vary the optimum weld strength along a weld line. This permits the welding of a wider variety of polymer materials and/or a wider range of varying sheet thicknesses even though generally more melt pools per grouping will result in a higher tensile strength per group.

In the preferred embodiment, the welding tips of the present invention are utilized to spot weld high-density polyethylene sheets. However, any suitable material may be welded utilizing the welding apparatus of the present invention.

Similarly, in the present invention, the welding horn could be made of any suitable material as can the welding tips of the present invention. In the preferred embodiments, the welding tips 81 are manufactured of aluminum and are then hardcoat anodized for better abrasion resistance. The tip is then treated with polytetrafluoroethylene, known under the trademark "Teflon", to prevent surface sticking. Further, the welding tips 81 can also be manufactured from other materials such as carbonized steel with proper heat treatment.

Previously, the use of this type system in automated production resulted in residual heat buildup within the welding tip. Cooling passages had to be provided within the anvils in order to control the temperature of the welding tips. In the present invention proper tip geometry and number of tips per group along the weld line reduce residual heat buildup as disclosed hereinabove. Still further, since the anvil never contacts the molten material or sheets being welded, less heat is applied to the anvil.

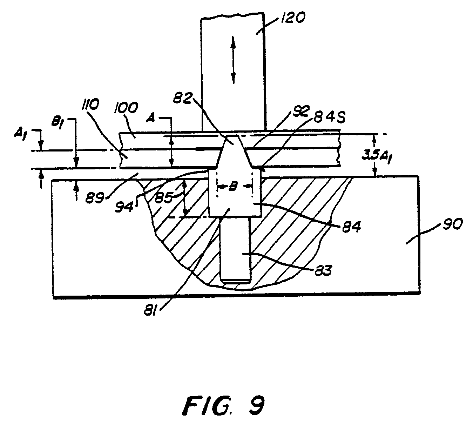

Figure 9 is an enlarged diagrammatic illustration of a single welding tip of a second preferred embodiment of the present invention as utilized in an inverse welding process. Welding tip 81 is a single unit comprising a shank 83, a base portion 84 having a diameter B and a frusto-conical projection 82 of a height A extending upward from this base portion. It should be understood that the welding tip of Figure 9 may be substituted for the welding tip of Figure 6 in the illustrations of Figures 5 and 8 according to the present invention. In a welding tip such as that illustrated in Figure 9, the distance of height A between the distal end cone and its junction with base portion 84 should be configured to equal approximately one and one-half times the thickness of a single sheet of material of two equal thickness sheets to be welded together. Further, the tip is preferably constructed such that the ratio of height A to width B of base portion 84 equals approximately 0.76.

Figure 9 also illustrates the operation of the second preferred embodiment of a single welding tip 81 of Figure 9 for welding sheet material in an inverse spot welding process. To facilitate inverse ultrasonic spot welding, the welding tip 81 is fastened to a stationary anvil or mounting bar 90, which is positioned on one side of two substantially equal-thickness sheets of material 100, 110 to be welded together. Figure 9 further illustrates the placement of a movable horn 120 on the opposite side of the sheets of material to be bonded by spot welding according to the teachings of the present invention.

With the welding tip of Figure 9, the positive stop 86A of Figure 7 may be eliminated or, if desired, it may be retained. As horn 120 is lowered, it pushes sheets 100 and 110 against weld tip 81, causing frusto-conical tip 82 to pierce sheets 110 and penetrate sheet 100 by more than half its thickness. The degree of penetration is, of course, controlled by the height of the frusto-conical tip 82 above the shoulder 84S of base 84 of the welding tip 81. Therefore, more than 1.5

sheet thicknesses $A_1$ are penetrated by frusto-conical tip 82. The height of frusto-conical tip 82 plus the extension of base 84 above the top of anvil body 20 is approximately 3.5 $A_1$ (3.5 times the sheet thickness). Accordingly, a free reservoir space 89 of a thickness $B_1$ results between sheet 110 and anvil 90.

Ultrasonic energy is applied to the sheets of material to be bonded via the ultrasonic horn 120. As the plurality of conical projections 82 of the ultrasonic welding tips 82 penetrate the sheet material along the weld line, the ultrasonic energy is concentrated at these spots. The sheet material is thereby softened, forming melt pools 92 between the sheets. Molten material, as at 94, is also accumulated in the free space 89 between anvil 90 and sheet 110. As stated hereinbefore, space 89 is created by the extension of base 84 and shoulder 84S above the top of anvil 90, which allows the frusto-conical tips 82 to be inserted to the controlled depth of the tips' height into sheets 100, 110. As in the Figure 7 embodiment, the back flow of molten material produced by the ultrasonic welding action literally hangs at 94 from the sheets 100, 110 above the anvil 90. The free flow of the molten sheet material effectively removes a substantial portion of molten material from the region of the ultrasonic energy concentration and avoids overheating of the molten material so removed. Thus, ultrasonic energy can be better concentrated on unsoftened material to continue the welding process.

When the spot welds have been completed to their desired depth (the shoulder 84S of base 84 controlling this distance), the application of ultrasonic energy is terminated. Cooling of the sheet thermoplastic causes shrinkage thereof. The configuration of the frusto-conical tips 82 is such that the tip 82 of welding tip 81 self-releases from the sheet material.

Further, the shoulder 84S of base 84 as it extends a distance $B_1$ above the top of the anvil body 90 also disperses evenly and radially the molten material between the juxtaposed sheets, producing a uniform, and therefore stronger, weld due to the pressure exerted on the sheets 100 and 110 by the horn 120 against the shoulder 84S of base 84.

Still further, the taper on the frusto-conical tip 82 has an included angle of approximately 45°, resulting in less displaced melted sheet material and provides a cosmetically more acceptable weld.

The present invention can be used to spot weld sheet thermoplastic material.

It should become apparent to one of ordinary skill in the art that various changes and modifications may be made in the device of the present invention which are within the contemplation of the inventor. Thus, the scope of the present application should not be construed as limited by the specification or drawings thereof, but must be determined from review of the claims included herewith.

**Claims**

1. A method for spot welding a plurality of sheets (30, 40; 100, 110) of thermoplastic material together wherein
   welding means is inserted into an obverse face of said juxtaposed sheets (30, 40; 100, 110) a sufficient distance so that the welding means at least partially penetrates each sheet (30, 40; 100, 110) of material being welded and
   ultrasonic energy is applied to said thermoplastic sheet material (30, 40; 100, 110) adjacent to said welding means,
   characterized in that
   the welding means is a plurality of welding tips (10; 81) each of which extends from on anvil (20; 90) and has a base attached to said anvil (20; 90) and an apex (18; 88) spaced from said anvil (20; 90) at a predetermined height above said anvil (20; 90), said plurality of welding tips (10; 81) extending along a weld line to be formed in said juxtaposed sheets (30, 40; 100, 110) and
   the distance the welding tips (10; 81) are inserted into one obverse face of said juxtaposed sheets (30, 40; 100, 110) is less than the height of said apex (18; 88) of said each welding tip (10, 81) above the anvil (20; 90) to thereby provide a reservoir space (14; 26; 89) between said anvil (20; 90) and the obverse face of said sheet material (3, 40; 100, 110) into which melted material may freely flow when the ultrasonic energy is applied.

2. The method of Claim 1 wherein the ultrasonic energy is provided by a welding horn (50; 120) extending along the length of said weld line and the welding tips (10; 81) adjacent to the distal ends of said weld line have heights slightly greater than the heights of the welding tips (10; 81) intermediate the distal ends of said weld line.

3. The method of claim 2 wherein the welding tips (81) are selectively removable from the anvil (90) from which they extend.

4. The method of claim 1 wherein the welding tips (10; 81) are cone-shaped, the base of each of said cone-shaped welding tips being supported on a major surface of the anvil (20; 90) from which it extends and having a maximum base dimension parallel to said major surface, the ratio of said predetermined height of said tip (10; 81) to said base dimension being approximately 1.2.

5. The method of claim 4 wherein the welding tips (81) are right circular cones (82) and wherein said base dimension is the base diameter thereof.

6. The method of claim 1 wherein the plurality of welding tips (10; 81) are staggered in two parallel rows along the welding line.

7. The method of claim 1 wherein the plurality of welding tips are clustered in groups ($W_1$, $W_2$, ...).

8. The method claim 1 wherein the welding tips (81) are frusto conical in shape, the base of each of said welding tips (81) being supported by a major surface of the anvil (90) from which it extends and having a maximum base dimension parallel to said major surface, the ratio of said predetermined height of said frusto conical shaped tip (81) to said base dimension being approximately 0.76.

9. The method of claim 8 wherein said frusto conical shaped welding tip (81) is a portion of a right circular cone (82), and said base dimension is the base diameter thereof.

10. The method of claim 8 wherein the frusto conical welding tip (81) is supported by a cylindrical portion (84), the diameter of said cylindrical portion (84) being larger than said base dimension, thereby providing a shoulder (84S) around said base, whereby said shoulder (84S) acts in conjunction with said inserting means as a stop against said obverse face.

11. A system for spot welding a plurality of sheets (30, 40; 100, 110) of thermoplastic material together, comprising:
   welding means adjacent to an obverse face of juxtaposed sheets (30, 40; 100, 110) of said thermoplastic material;
   means for inserting the welding means into the obverse face of said juxtaposed sheets (30, 40; 100, 110) a sufficient distance so that the welding means at least partially penetrates each sheet (30, 40; 100, 110) of material being welded; and
   means (50; 120) for applying ultrasonic energy to said thermoplastic sheet material (30, 40; 100, 110) adjacent to said welding means;
   characterized in that
   the welding means is a plurality of welding tips (10; 81), each of which extends from an anvil (20; 90) and has a base attached to said anvil (20; 90) and an apex (18; 88) spaced from said anvil (20; 90) at a predetermined height above said anvil (20; 90), said plurality of welding tips (10; 81) extending along a weld line to be formed in said juxtaposed sheets (30, 40; 100, 110) and
   the distance the welding tips (10; 81) are inserted into the obverse face of said juxtaposed sheet (30, 40; 100, 110) is less than the height of said apex (18; 88) of said each welding tip (10; 81) above the anvil (20; 90), to thereby provide a reservoir space (14; 26; 89) between said anvil (20; 90) and the obverse face of said sheet material (30, 40; 100, 110) whereby melted material may freely flow into said reservoir space (14; 26; 89).

12. The system of claim 11 wherein the means for applying ultrasonic energy comprises a welding horn (50; 120) extending along the length of said weld line and the welding tips (10; 81) adjacent to the distal ends of said weld line have heights slightly greater than the heights of the welding tips (10; 81) intermediate the distal ends of said weld line.

13. The system of claim 12 wherein the welding tips (81) are selectively removable from the anvil (90) from which they extend.

14. The system of claim 11 wherein the welding tips (10; 81) are cone-shaped, the base of each of said cone-shaped welding tips being supported on a major surface of the anvil (20; 90) from which it extends and having a maximum base dimension parallel to said major surface, the ratio of said predetermined height of said tip (10; 81) to said base dimension being approximately 1.2.

15. The system of claim 14 wherein the welding tips (81) are right circular cones (82) and wherein said base dimension is the base diameter thereof.

16. The system of claim 11 wherein the plurality of welding tips (10; 81) are staggered in two parallel rows along the welding line.

17. The system of claim 11 wherein the plurality of welding tips are clustered in groups ($W_1$, $W_2$, . . .).

18. The system of claim 11 wherein the welding tips (81) are frusto conical in shape, the base of each of said welding tips (81) being supported by a major surface of the anvil (90) from which it extends and having a maximum base dimension parallel to said major surface, the ratio of said predetermined height of said frusto conical shaped tip (81) to said base dimension being approximately 0.76.

19. The system of claim 18 wherein said frusto conical shaped welding tip (81) is a portion of a right circular cone (82), and said base dimension is the base diameter thereof.

20. The system of claim 18 wherein the frusto conical welding tip (81) is supported by a cylindrical portion (84), the diameter of said cylindrical portion (84) being larger than said base dimension, thereby providing a shoulder (84S) around said base, whereby said shoulder (84S) acts in conjunction with said inserting means as a stop against said obverse face.

**Patentansprüche**

1. Verfahren zum Zusammen-Punktschweißen einer Mehrzahl von Folien (30, 40; 100, 110) aus thermoplastichem Material, worin
   eine Schweißeinrichtung in eine Vorderseite der genannten nebeneinanderliegenden Folien (30, 40; 100, 110) eine ausreichende Strecke weit eingeschoben wird, so daß die Schweißeinrichtung jede Folie (30, 40; 100, 110) von zu verschweißendem Material zumindest teilweise durchdringt und
   Ultraschallenergie dem genannten, an die genannte Schweißeinrichtung angrenzenden thermoplastischen Folienmaterial (30, 40; 100, 110) zugeführt wird,
   dadurch gekennzeichnet, daß
   die Schweißeinrichtung eine Mehrzahl von Schweißspitzen (10; 81) darstellt, die jeweils von einem Amboß (20; 90) ausgehen und mit einem Basisteil an dem genannten Amboß (20; 90) angebracht sind und eine Spitze (18; 88) im Abstand von dem genannten Amboß (20; 90) in einer vorbestimmten Höhe über dem genannten Amboß (20; 90) aufweisen, welche Mehrzahl von Schweißspitzen (10; 81) längs einer in den genannten nebeneinanderliegenden Folien (30, 40; 100, 110) auszubildenden Schweißlinie verläuft, und
   die Strecke, um die die Schweißspitzen (10; 81) in die eine Vorderseite der nebeneinanderliegenden Folien (30, 40; 100, 110) eingeschoben werden, kürzer ist als die Höhe der genannten Spitze (18; 88) jeder der genannten Schweißspitzen (10; 81) über dem Amboß (20; 90), um dadurch einen Sammelraum (14; 26; 89) zwischen dem genannten Amboß (20; 90) und der Vorderseite des genannten Folienmaterials (30, 40; 100, 110) zu bilden, in den geschmolzenes Material ungehindert fließen kann, wenn die Ultraschallenergie zugeführt wird.

2. Verfahren nach Anspruch 1, worin die Ultraschallenergie von einem Schweißhorn (50; 120) zugeführt wird, das sich über die Länge der genannten Schweißlinie erstreckt, und die Schweißspitzen (10; 81) an den entfernten Enden der genannten Schweißlinie eine Höhe aufweisen, die etwas größer ist als die Höhen der Schweißspitzen (10; 81) zwischen den entfernten Enden der genannten Schweißlinie.

3. Verfahren nach Anspruch 2, worin die Schweißspitzen (81) von dem Amboß (90), von dem sie ausgehen, wahlweise abgenommen werden können.

4. Verfahren nach Anspruch 1, worin die Schweißspitzen (10; 81) kegelförmig sind, wobei der Basisteil jeder der genannten kegelförmigen Schweißspitzen auf einer Hauptfläche des Amboß' (20; 90) getragen wird, von der er ausgeht, und eine größte Basisabmessung parallel zu der genannten Hauptfläche hat, wobei ferner das Verhältnis der genannten vorbestimmten Höhe der genannten Spitze (10; 81) zu der genannten Basisabmessung ungefähr 1,2 beträgt.

5. Verfahren nach Anspruch 4, worin die Schweißspitzen (81) gerade Kreiskegel (82) sind und worin die genannte Basisabmessung ihren Basisdurchmesser darstellt.

6. Verfahren nach Anspruch 1, worin die Mehrzahl von Schweißspitzen (10; 81) in zwei parallelen Reihen längs der Schweißlinie versetzt angeordnet ist.

7. Verfahren nach Anspruch 1, worin die Mehrzahl von Schweißspitzen in Gruppen (W$_1$, W$_2$, . . .) zusammengefaßt ist.

8. Verfahren nach Anspruch 1, worin die Schweißspitzen (81) kegelstumpfförmig sind, wobei der Basisteil jeder der genannten Schweißspitzen (81) von einer Hauptfläche des Amboß' (90) getragen wird, von der er ausgeht, und eine größte Basisabmessung parallel zu der genannten Hauptfläche hat, wobei ferner das Verhältnis der genannten vorbestimmten Höhe der genannten kegelstumpfförmigen Spitze (81) zu der genannten Basisabmessung ungefähr 0,76 beträgt.

9. Verfahren nach Anspruch 8, worin die genannte kegelstumpfförmige Schweißspitze (81) Teil eines geraden Kreiskegels (82) ist und die genannte Basisabmessung dessen Basisdurchmesser ist.

10. Verfahren nach Anspruch 8, worin die kegelstumpfförmige Schweißspitze (81) von einem zylindrischen Abschnitt (84) getragen wird, wobei der Durchmesser des genannten zylindrischen Abschnitts (84) größer als die genannte Basisabmessung ist, die dadurch eine Schulter (84S) um die genannte Basis bildet, wodurch die genannte Schulter (84S) in Verbindung mit der genannten einzuschiebenden Einrichtung als Anschlag gegenüber der genannten Vorderseite wirkt.

11. Anlage zum Zusammen-Punktschweißen einer Mehrzahl Folien (30, 40; 100, 110) aus thermoplastischem Material, umfassend:
    eine an eine Vorderseite von nebeneinanderliegenden Folien (30, 40; 100, 110) des genannten thermoplastischen Materials anstoßende Schweißeinrichtung;
    eine Einrichtung zum Einschieben der Schweißeinrichtung in die Vorderseite der genannten nebeneinanderliegenden Folien (30, 40; 100, 110) um eine so große Strecke, daß die SChweißeinrichtung jede Folie (30, 40; 100, 110) des zu schweißenden Materials zumindest teilweise durchdringt; und
    eine Einrichtung (50; 120) zum Zuführen von Ultraschallenergie zu dem genannten, an der genannten Schweißeinrichtung anliegenden thermoplastischen Folienmaterial (30, 40; 100, 110);
    dadurch gekennzeichnet, daß
    die Schweißeinrichtung eine Mehrzahl von Schweißspitzen (10; 81) darstellt, die jeweils von einem Amboß (20; 90) ausgehen und mit ihrer Basis an dem genannten Amboß (20; 90) angebracht sind und eine Spitze (18; 88) im Abstand von dem genannten Amboß (20; 90) in einer vorbestimmten Höhe über dem genannten Amboß (20; 90) aufweisen, welche genannte Mehrzahl von Schweißspitzen (10; 81) längs einer in den genannten nebeneinanderliegenden Folien (30, 40; 100, 110) auszubildenden Schweißlinie verläuft und
    die Strecke, um die die Schweißspitzen (10; 81) in die Vorderseite der genannten nebeneinanderliegenden Folien (30, 40; 100, 110) eingeschoben sind, kürzer ist als die Höhe der genannten Spitze (18; 88) jeder der genannten Schweißspitzen (10; 81) über dem Amboß (20; 90), um dadurch einen Sammelraum (14; 26; 89) zwischen dem genannten Amboß (20; 90) und der Vorderseite des genannten Folienmaterials (30, 40; 100; 110) zu bilden, wodurch geschmolzenes Material ungehindert in den genannten Sammelraum (14; 26; 89) fließen kann.

12. Anlage nach Anspruch 11, worin die Einrichtung zum Zuführen von Ultraschallenergie ein Schweißhorn (50; 120) aufweist, das sich längs der genannten Schweißlinie erstreckt, und die Schweißspitzen (10; 81) an den entfernten Enden der genannten Schweißlinie eine Höhe aufweisen, die etwas größer ist als die Höhen der Schweißspitzen (10; 81) zwischen den entfernten Enden der genannten Schweißlinie.

13. Anlage nach Anspruch 12, worin die Schweißspitzen (81) von dem Amboß (90), von dem sie ausgehen, wahlweise abnehmbar sind.

14. Anlage nach Anspruch 11, worin die Schweißspitzen (10; 81) kegelförmig sind, wobei der Basisteil jeder der genannten kegelförmigen Schweißspitzen auf einer Hauptfläche des Amboß' (20; 90) getragen wird, von der er ausgeht, und eine größte Basisabmessung parallel zu der genannten Hauptfläche hat, wobei ferner das Verhältnis der genannten vorbestimmten Höhe der genannten Spitze (10; 81) zu der genannten Basisabmessung ungefähr 1,2 beträgt.

15. Anlage nach Anspruch 14, worin die Schweißspitzen (81) gerade Kreiskegel (82) sind und worin die genannte Basisabmessung ihren Basisdurchmesser darstellt.

16. Anlage nach Anspruch 11, worin die Mehrzahl von Schweißspitzen (10; 81) in zwei parallelen Reihen längs der Schweißlinie versetzt angeordnet sind.

17. Anlage nach Anspruch 11, worin die Mehrzahl von Schweißspitzen in Gruppen (W₁, W₂, ...) zusammengefaßt ist.

18. Anlage nach Anspruch 11, worin die Schweißspitzen (81) kegelstumpfförmig sind, wobei der Basisteil jeder der genannten Schweißspitzen (81) von einer Hauptfläche des Amboß' (90) getragen wird, von der er ausgeht, und eine größte Basisabmessung parallel zu der genannten Hauptfläche hat, wobei ferner das Verhältnis der genannten vorbestimmten Höhe der genannten kegelstumpfförmigen Spitze (81) zu der genannten Basisabmessung ungefähr 0,76 beträgt.

19. Anlage nach Anspruch 18, worin die genannte kegelstumpfförmige Schweißspitze (81) Teil eines geraden Kreiskegels (82) ist und die genannte Basisabmessung dessen Basisdurchmesser ist.

20. Anlage nach Anspruch 18, worin die kegelstumpfförmige Schweißspitze (81) von einem zylindrischen Bereich (84) getragen wird und der Durchmesser des genannten zylindrischen Bereich (84) größer als die genannte Basisabmessung ist, die dadurch eine Schulter (84S) um die genannte Basis bildet, wodurch die genannte Schulter (84S) in Verbindung mit der genannten einzuschiebenden Einrichtung als Anschlag gegenüber der genannten Vorderseite wirkt.

**Revendications**

1. Procédé de soudage par points de plusieurs feuilles (30, 40; 100, 110) de matière thermoplastique les unes aux autres, dans lequel
   un dispositif de soudage est introduit dans une face formant le recto de feuilles juxtaposées (30, 40; 100, 110) sur une distance suffisante pour que le dispositif de soudage pénètre au moins partiellement dans chaque feuille (30, 40; 100, 110) à souder, et
   de l'énergie ultrasonore est appliquée à la matière thermoplastique des feuilles (30, 40; 100, 110) près du dispositif de soudage,
      caractérisé en ce que
      le dispositif de soudage est formé de plusieurs têtes de soudage (10; 81) dépassant chacune d'une enclume (20; 90) et ayant une base fixée à l'enclume (20; 90) et un sommet (18; 88) distant de l'enclume (20; 90), à une hauteur prédéterminée au-dessus de l'enclume (20; 90), les têtes de soudage (10; 81) étant disposées le long d'une ligne de soudage à former dans les feuilles juxtaposées (30, 40; 100, 110), et
      la distance d'introduction des têtes de soudage (10; 81) à la face du recto des feuilles juxtaposées (30, 40; 100, 110) est inférieure à la hauteur du sommet (18; 88) de chaque tête de soudage (10, 81) au-dessus de l'enclume (20; 90) afin qu'un espace formant réservoir (14; 26; 89) soit délimité entre l'enclume (20; 90) et la face formant le recto de la feuille (30, 40; 100, 110) et que la matière fondue puisse s'écouler librement lorsque de l'énergie ultrasonore est appliquée.

2. Procédé selon la revendication 1, dans lequel de l'énergie ultrasonore est transmise par un cornet de soudage (50; 120) disposé suivant la longueur de la ligne de soudage, et les têtes de soudage (10; 81) adjacentes aux extrémités externes de la ligne de soudage ont des hauteurs légèrement supérieures aux hauteurs des têtes de soudage (10; 81) placées entre les extrémités externes de la ligne de soudage.

3. Procédé selon la revendication 2, dans lequel les têtes de soudage (81) peuvent être retirées sélectivement de l'enclume (90) dont elles dépassent.

4. Procédé selon la revendication 1, dans lequel les têtes de soudage (10; 81) ont une forme de cône, la base de chaque tête de soudage en forme de cône étant supportée par une grande face de l'enclume (20; 90) dont elle dépasse et ayant une dimension maximale de base parallèle à la surface principale, le rapport de la hauteur prédéterminée de la tête (10; 81) à la dimension de la base étant d'environ 1,2.

5. Procédé selon la revendication 4, dans lequel les têtes de soudage (81) sont des cônes (82) de section droite circulaire, et dans lequel la dimension de la base est le diamètre de la base.

6. Procédé selon la revendication 1, dans lequel plusieurs têtes de soudage (10; 81) sont décalées sous forme de deux lignes parallèles à la ligne de soudage.

7. Procédé selon la revendication 1, dans lequel plusieurs têtes de soudage sont rassemblées sous forme de groupes (W₁, W₂, ...).

8. Procédé selon la revendication 1, dans lequel les têtes de soudage (81) ont une forme tronconique, la base de chaque tête de soudage (81) étant supportée par une grande face de l'enclume (90) dont elle dépasse et ayant une dimension maximale de base parallèle à la grande face, le rapport de la hauteur prédéterminée de la tête de forme tronconique (81) à la dimension de la base étant d'environ 0,76.

9. Procédé selon la revendication 8, dans lequel la tête de soudage (81) de forme tronconique est une partie d'un cône (82) de section droite circulaire, et la dimension de base est le diamètre de la base.

10. Procédé selon la revendication 8, dans lequel la tête tronconique de soudage (81) est supportée par une partie cylindrique (84), le diamètre de la partie cylindrique (84) étant supérieur à la dimension de base, si bien qu'un épaulement (84S) est formé autour de la base, l'épaulement (84S) coopérant avec le dispositif d'introduction à la formation d'une butée contre la face constituant le recto.

11. Ensemble de soudage par points de plusieurs feuilles (30, 40; 100, 110) d'une matière thermoplastique les unes aux autres, comprenant:

un dispositif de soudage adjacent à une face formant le recto des feuilles juxtaposées (30, 40; 100, 110) de matière thermoplastique,

un dispositif d'introduction du dispositif de soudage dans la face du recto des feuilles juxtaposées (30, 40; 100, 110) sur une distance suffisante pour que le dispositif de soudage pénètre au moins partiellement dans chaque feuille (30, 40; 100, 110) à souder, et

un dispositif (50; 120) destiné à appliquer de l'énergie ultrasonore à la matière thermoplastique des feuilles (30, 40; 100, 110) près du dispositif de soudage, caractérisé en ce que

le dispositif de soudage est formé par plusieurs têtes de soudage (10; 81) dépassant chacune d'une enclume (20; 90) et ayant une base fixée à l'enclume (20; 90) et un sommet (18; 88) distant de l'enclume (20; 90), à une hauteur prédéterminée au-dessus de l'enclume (20; 90), les têtes de soudage (10; 81) étant disposées le long d'une ligne de soudage qui doit être formée dans les feuilles juxtaposées (30, 40; 100, 110), et

la distance sur laquelle les têtes de soudage (10; 81) pénètrent dans la face du recto de la feuille juxtaposée (30, 40; 100, 110) est inférieure à la hauteur du sommet (18; 88) de chaque tête de soudage (10; 81) au-dessus de l'enclume (20; 90), afin qu'un espace formant réservoir (14; 26; 89) soit délimité entre l'enclume (20; 90) et la face du recto de la feuille (30, 40; 100, 110), et que de la matière fondue puisse s'écouler librement dans l'espace formant réservoir (14; 26; 89).

12. Ensemble selon la revendication 11, dans lequel le dispositif destiné à appliquer de l'énergie ultrasonore est un cornet de soudage (50; 120) disposé suivant la longueur de la ligne de soudage et les têtes de soudage (10; 81) adjacentes aux extrémités externes de la ligne de soudage ont des hauteurs légèrement supérieures à celles des têtes de soudage (10; 81) comprises entre les extrémités externes de la ligne de soudage.

13. Ensemble selon la revendication 12, dans lequel les têtes de soudage (81) peuvent être retirées sélectivement de l'enclume (90) dont elles dépassent.

14. Ensemble selon la revendication 11, dans lequel les têtes de soudage (10; 81) ont une forme de cône, la base de chaque tête de soudage de forme conique étant supportée par une grande face de l'enclume (20; 90) dont elle dépasse et ayant une dimension maximale de base parallèle à la surface principale, le rapport de la hauteur prédéterminée de la tête (10; 81) à la dimension de la base étant d'environ 1,2.

15. Ensemble selon la revendication 14, dans lequel les têtes de soudage (81) sont des cônes (82) de section droite circulaire, et dans lequel la dimension de ladite base est le diamètre de la base.

16. Ensemble selon la revendication 11, dans lequel les têtes de soudage (10; 81) sont décalées suivant deux lignes parallèles à la ligne de soudage.

17. Ensemble selon la revendication 11, dans lequel les têtes de soudage sont associées par groupes ($W_1$, $W_2$, ...).

18. Ensemble selon la revendication 11, dans lequel les têtes de soudage (81) ont une forme tronconique, la base de chaque tête de soudage (81) étant supportée par une grande face de l'enclume (90) dont elle dépasse et ayant une dimension maximale de base parallèle à la grande face, le rapport de la hauteur prédéterminée de la tête de forme tronconique (81) à la dimension de base étant d'environ 0,76.

19. Ensemble selon la revendication 18, dans lequel la tête de soudage de forme tronconique (81) est une partie d'un cône (82) de section droite circulaire, et la dimension de ladite base est son diamètre de base.

20. Ensemble selon la revendication 18, dans lequel la tête tronconique de soudage (81) est supportée par une portion cylindrique (84), le diamètre de la portion cylindrique (84) étant supérieur à la dimension de base, assurant ainsi un épaulement (84S) autour de ladite base, de sorte que ledit épaulement coopère avec le dispositif d'introduction à la formation d'une butée contre la face du rétro.

FIG. 1

FIG. 2

FIG. 3

FIG. 4

**FIG. 5**

$$\frac{TIP\ HEIGHT\ A}{BASE\ B}\ RATIO = 1.2$$

**FIG. 6**

FIG. 7

FIG. 8

FIG. 9